# FASCICULE DE BREVET EUROPEEN

(11) **EP 2 983 851 B1**
(45) Date de publication et mention de la délivrance du brevet: **02.01.2019**
(21) Numéro de dépôt: 14722252.5
(22) Date de dépôt: 01.04.2014
(51) Int. Cl.: B22F 3/24, B23K 26/342, B29C 64/153, B29C 64/40, B22F 3/105, B22F 5/04

(54) **PROCEDE DE FABRICATION DE PIECE DISSYMETRIQUE PAR FABRICATION ADDITIVE**
VERFAHREN ZUR HERSTELLUNG EINER ASYMMETRISCHEN KOMPONENTE MITTELS ADDITIVHERSTELLUNGSVERFAHREN
METHOD FOR MANUFACTURING AN ASYMMETRIC COMPONENT USING ADDITIVE MANUFACTURING

(30) Priorité: 10.04.2013 FR 1353217
(43) Date de publication de la demande: 17.02.2016
(73) Titulaire: Safran Aircraft Engines, 75015 Paris (FR)
(72) Inventeur: BAUDIMONT, Cyrille, F-77550 Moissy-Cramayel Cedex (FR)
(74) Mandataire: Joanny, Damien Henri Xavier
(86) Numéro de dépôt international: PCT/FR2014/050779
(87) Numéro de publication internationale: WO 2014/167212

(56) Documents cités:
- WO-A1-2012/001324
- WO-A1-2012/103603
- US-A- 5 216 616
- US-A1- 2003 004 600

## Description

### DOMAINE DE L'INVENTION

Le présent exposé concerne un procédé de fabrication de pièce par fabrication additive, notamment par fusion ou frittage de particules de poudre au moyen d'un faisceau de haute énergie.

Ce procédé est particulièrement adapté pour fabriquer des pièces présentant des dissymétries ou de fortes disproportions massiques, à destination notamment du domaine aéronautique.

### ETAT DE LA TECHNIQUE ANTERIEURE

Il est désormais connu, dans le domaine aéronautique notamment, d'utiliser des méthodes de fabrication additive pour la réalisation de certains pièces dont la géométrie est fine ou complexe.

Un exemple classique de fabrication additive est la fabrication par fusion ou frittage de particules de poudre au moyen d'un faisceau de haute énergie. Parmi ces faisceaux de haute énergie, on peut mentionner notamment le faisceau laser et le faisceau d'électrons.

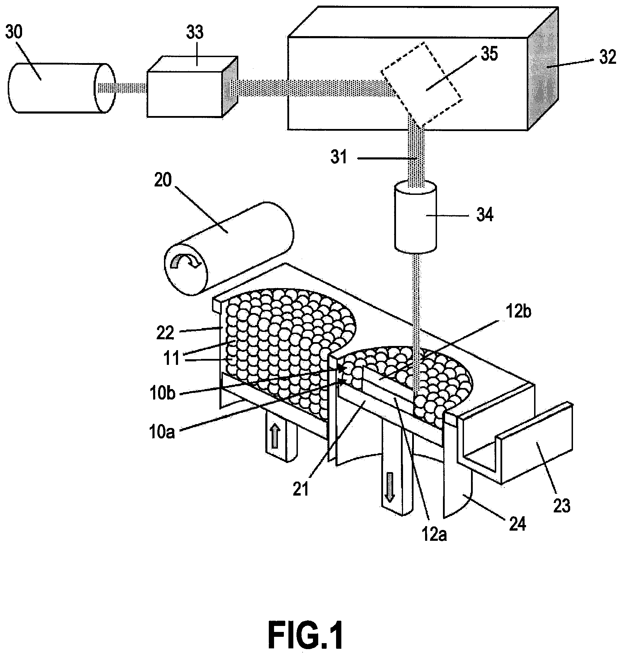

Par "fusion sélective par laser", en anglais "Selective Laser Melting" (SLM), on entend un procédé dont les caractéristiques principales sont rappelées ci-après, en référence à la FIG 1 illustrant un dispositif classique de fabrication de pièce par fusion sélective ou frittage sélectif de lits de poudre au moyen d'un faisceau laser.

On dépose, par exemple à l'aide d'un rouleau 20 (ou tout autre moyen de dépose), une première couche 10a de poudre d'un matériau sur un plateau de fabrication 21 (il peut s'agir d'un plateau seul ou surmonté d'un support massif, d'une partie d'une autre pièce ou d'une grille support utilisée pour faciliter la construction de certaines pièces).

Cette poudre est transvasée depuis un bac d'alimentation 22 lors d'un mouvement aller du rouleau 20 puis elle est raclée, et éventuellement légèrement compactée, lors d'un (ou de plusieurs) mouvement(s) de retour du rouleau 20. La poudre est composée de particules 11. L'excédent de poudre est récupéré dans un bac de recyclage 23 situé de façon adjacente au bac de construction 24 dans lequel se déplace verticalement le plateau de fabrication 21.

On utilise également un générateur 30 de faisceau laser 31, et un système de pilotage 32 apte à diriger ce faisceau 31 sur n'importe quelle région du plateau de fabrication 21 de façon à balayer n'importe quelle région d'une couche de poudre préalablement déposée. La mise en forme du faisceau laser 31 et la variation de son diamètre sur le plan focal se font respectivement au moyen d'un dilatateur de faisceau ou « Beam Expander » 33 et d'un système de focalisation 34, l'ensemble constituant le système optique.

Ensuite, on porte une région de cette première couche 10a de poudre, par balayage avec un faisceau laser 31, à une température supérieure à la température de fusion de cette poudre.

Le procédé SLM peut utiliser n'importe quel faisceau de haute énergie à la place du faisceau laser 31, et notamment un faisceau d'électrons, tant que ce faisceau est suffisamment énergétique pour fondre les particules de poudre et une partie du matériau sur lequel les particules reposent.

Ce balayage du faisceau est effectué par exemple par une tête galvanométrique faisant partie d'un système de pilotage 32. Par exemple ce système de pilotage comprend au moins un miroir 35 orientable sur lequel le faisceau laser 31 se réfléchit avant d'atteindre une couche de poudre dont chaque point de la surface se trouve située toujours à la même hauteur par rapport à la lentille de focalisation, contenue dans le système de focalisation 34, la position angulaire de ce miroir étant pilotée par une tête galvanométrique pour que le faisceau laser balaye au moins une région de la première couche de poudre, et suive ainsi un profil de pièce préétabli. Pour ce faire, la tête galvanométrique est commandée selon les informations contenues dans la base de données de l'outil informatique utilisé pour la conception et la fabrication assistées par ordinateur de la pièce à fabriquer.

Ainsi, les particules de poudre 11 de cette région de la première couche 10a sont fondues et forment un premier élément 12a d'un seul tenant, solidaire avec le plateau de fabrication 21. A ce stade, on peut également balayer avec le faisceau laser plusieurs régions indépendantes de cette première couche pour former, après fusion et solidification de la matière, plusieurs premiers éléments 12a disjoints les uns des autres.

On abaisse le plateau de fabrication 21 d'une hauteur correspondant à l'épaisseur de la première couche de poudre 10a (20 à 100 µm et en général de 30 à 50 µm).

On dépose ensuite une deuxième couche 10b de poudre sur la première couche 10a et sur ce premier élément d'un seul tenant ou consolidé 12a, puis on chauffe par exposition au faisceau laser 31 une région de la deuxième couche 10b qui est située partiellement ou complètement au-dessus de ce premier élément d'un seul tenant ou consolidé 12a dans le cas illustré à la FIG 1, de telle sorte que les particules de poudre de cette région de la deuxième couche 10b sont fondues avec au moins une partie de l'élément 12a et forment un deuxième élément d'un seul tenant ou consolidé 12b, l'ensemble de ces deux éléments 12a et 12b formant, dans le cas illustré à la FIG 1, un bloc d'un seul tenant.

Une telle technique de fabrication additive, ou d'autres telle celle de fabrication par projection de poudre, assure donc un excellent contrôle de la géométrie de la pièce à fabriquer et permet de réaliser des pièces possédant une grande finesse.

Toutefois, ces techniques nécessitent des stratégies de construction réfléchies et spécifiques à la pièce à fabriquer pour respecter les tolérances dimensionnelles de cette dernière et lui assurer une bonne tenue mécanique. Ainsi, il est nécessaire d'utiliser un logiciel de conception assistée par ordinateur (CAO) afin de définir la meilleure position et la meilleure orientation de la pièce en vue de sa fabrication couche par couche. Or, si les stratégies de fabrication se développent et s'affinent, ces dernières ne sont pas à ce jour satisfaisantes pour l'obtention de pièces dissymétriques ou présentant de fortes disproportions massiques.

En effet, lors de la réalisation de telles pièces par fabrication additive, on constate fréquemment des défauts irréversibles métallurgiques, par exemple l'apparition de criques, et/ou dimensionnelles, certaines portions de la pièce dépassant les tolérances prescrites. Les disproportions massiques, résultants notamment de dissymétries de la pièce, entraînent l'accumulation de contraintes résiduelles dans certaines zones de la pièce qui agissent alors en déformations : ces contraintes résiduelles mal équilibrées entrainent ainsi des dispersions géométriques responsables des défauts constatés dans les pièces obtenues. Or, de tels défauts sont souvent rédhibitoires et conduisent les pièces obtenues au rebut, ce qui entraîne des pertes importantes et donc des coûts globaux de fabrication élevés.

Il existe donc un réel besoin pour un procédé de fabrication de pièce par fabrication additive qui soit adapté à de telles pièces dissymétriques ou présentant de fortes disproportions massiques.

Le document WO2012103603 décrit un procédé de fabrication pour deux ou plusieurs structures à paroi mince par fabrication additive, qui consiste à orienter les structures à paroi mince les unes par rapport aux autres de sorte que les contraintes accumulées dans les structures à paroi mince se neutralisent partiellement pendant la fabrication.

### PRESENTATION DE L'INVENTION

Le présent exposé concerne un procédé de fabrication de pièce par fabrication additive, comprenant les étapes suivantes : fourniture d'un modèle numérique d'une pièce à fabriquer, orientation du modèle par rapport à une direction de construction de la pièce, modification du modèle par ajout d'une portion sacrificielle d'équilibrage configurée de manière à équilibrer les contraintes résiduelles amenées à apparaitre dans la pièce lors de sa fabrication, réalisation d'une pièce brute couche par couche à l'aide d'une technique de fabrication additive sur la base du modèle ainsi modifié, lesdites couches étant empilées dans la direction de construction, suppression par un procédé d'enlèvement de matière de la partie sacrificielle de la pièce brute issue de la portion sacrificielle d'équilibrage du modèle, et obtention de cette manière de ladite pièce à fabriquer.

Grâce à ce procédé, il est possible, au stade de la conception assistée par ordinateur, de détecter un risque potentiel d'accumulation de contraintes résiduelles au cours de la fabrication en raison notamment de dissymétries, ou tout au moins de fortes disproportions massiques, au sein de la pièce et de corriger artificiellement le modèle de la pièce afin de lui donner une géométrie globale plus cohérente et mieux proportionnée qui permettra d'équilibrer les contraintes résiduelles au sein de la pièce lors de sa fabrication.

Ainsi, lors de la fabrication couche par couche, les contraintes résiduelles se répartiront de manière plus uniforme au sein de la pièce : on évitera de cette manière que ces contraintes résiduelles ne se concentrent dans certaines zones de la pièce au-delà d'un certain seuil risquant d'entraîner des déformations critiques de la pièce. Par exemple, l'ajout d'une telle portion sacrificielle peut permettre de diminuer certains effets de bord ou de déplacer une zone de concentration de contraintes vers une partie de la pièce moins sensible aux déformations, par exemple une partie plus épaisse ou possédant une géométrie particulièrement simple, ou vers une partie de la pièce dans laquelle les tolérances dimensionnelles ou mécaniques sont plus élevées.

Dès lors, la pièce brute obtenue présente moins de défauts tant dimensionnels que mécaniques : il suffit alors de retirer par un procédé d'enlèvement de matière connu la partie sacrificielle d'équilibrage de la pièce brute issue de la portion sacrificielle d'équilibrage du modèle afin d'obtenir la pièce souhaitée.

Grâce à ce procédé, il est donc possible d'obtenir par fabrication additive une pièce dissymétrique ou fortement disproportionnée profitant de tous les avantages de la fabrication additive mais ne présentant que peu ou pas de défauts.

Dans certains modes de mise en oeuvre, la pièce à fabriquer possède une partie dissymétrique, et la portion sacrificielle d'équilibrage est configurée de manière à ce que la partie sacrificielle de la pièce brute possède une masse comprise entre 70% et 130% de celle de la partie dissymétrique, de préférence entre 90% et 110%.

Par partie dissymétrique, on entend une partie qui, si elle était retirée de la pièce, laisserait une pièce résiduelle ayant au moins un élément de symétrie de plus que la pièce d'origine. Cette définition se transpose directement au modèle.

Par élément de symétrie, on entend une symétrie par rapport à un plan donné, une symétrie par rapport à un point donné, une invariance par rapport à une rotation donnée, ou encore tout autre invariance par une relation géométrique donnée.

Dans l'ensemble de cet exposé, on entend donner à la notion de symétrie une certaine tolérance : ainsi, un élément ou un couple d'élément est dit symétrique si au moins 90% de cet élément ou de ce couple est effectivement symétrique au sens strict de la géométrie ; on écarte ainsi d'éventuelles différences locales mineures. Cette définition s'étend aux plans de symétrie et plus largement à tous les éléments de symétrie.

Grâce à cette partie sacrificielle possédant une masse relativement proche de celle de la partie dissymétrique, il est possible de corriger au moins en partie la disproportion massique résultant de cette partie dissymétrique : une telle approche permet de mieux équilibrer les contraintes résiduelles dans la pièce brute, facilement et de manière substantielle, ce qui a un impact favorable remarquable sur la survenance de défauts dans la pièce brute.

Dans certaines modes de mise en oeuvre, la portion sacrificielle d'équilibrage est ajoutée sur une hauteur sensiblement équivalente à la hauteur de la partie dissymétrique. Ainsi, le rééquilibrage des contraintes résiduelles est effectué pour sensiblement toutes les couches connaissant originellement une dissymétrie et donc une disproportion massique.

Dans certains modes de mise en oeuvre, la portion sacrificielle d'équilibrage prolonge le modèle dans sa direction de plus grande extension.

Dans certains modes de mise en oeuvre, la portion sacrificielle d'équilibrage est configurée de manière à ce que la partie sacrificielle obtenue soit construite à l'opposé de la partie dissymétrique par rapport à la pièce brute. De cette manière, on rééquilibre la distribution massique de la pièce brute, et donc les contraintes résiduelles amenées à apparaître au cours de la fabrication, ces dernières étant en partie déplacées vers le centre de la pièce.

Dans certains modes de mise en oeuvre, la portion sacrificielle d'équilibrage est ajoutée de manière à munir le modèle d'au moins un élément de symétrie de plus, de préférence d'un plan de symétrie de plus. La répartition des contraintes résiduelles sera donc mieux répartie puisqu'elle bénéficiera elle aussi d'un élément de symétrie en plus. Une telle restauration artificielle de symétrie, au sens de l'exposé, permet ainsi de diminuer de manière frappante l'occurrence et l'ampleur des défauts de la pièce brute.

Dans certains modes de mise en oeuvre, la portion sacrificielle d'équilibrage est localisée de manière à ce que la partie sacrificielle obtenue se situe dans une zone symétrique à la zone de la partie dissymétrique par rapport à un plan passant par le centre de gravité de la pièce brute.

Dans certains modes de mise en oeuvre, la portion sacrificielle d'équilibrage est configurée de manière à ce que partie sacrificielle de la pièce brute soit symétrique à la partie dissymétrique par rapport à un plan, ce plan étant un plan de symétrie de la pièce brute. Un tel plan de symétrie est particulièrement facile à mettre en place à l'aide du logiciel de CAO lors du travail sur le modèle de la pièce.

Dans certains modes de mise en oeuvre, l'étape de modification du modèle inclut une étape de définition d'un plan d'équilibrage, parallèle à la direction de construction, correspondant à un plan de symétrie dont disposerait le modèle s'il était dépourvu de sa portion dissymétrique correspondant à la partie dissymétrique de la pièce. Cette étape permet d'identifier facilement un plan de symétrie candidat pour la pièce brute.

Dans certains modes de mise en oeuvre, l'étape de modification du modèle inclut une étape d'équilibrage durant laquelle on ajoute au modèle, dans chaque couche perpendiculaire à la direction de construction, une tranche d'équilibrage restaurant la symétrie de la couche considérée du modèle par rapport au plan d'équilibrage. De cette manière, il est possible d'homogénéiser les masses de part et d'autre du plan d'équilibrage couche par couche le long de la direction de construction : chaque couche qui sera réalisée par fabrication additive aura donc une répartition de masse symétrique, ce qui minimise les déformations.

Dans certains modes de mise en oeuvre, ladite technique de fabrication additive est un procédé de fabrication par fusion sélective ou frittage sélectif de lits de poudre.

Dans certains modes de mise en oeuvre, ledit procédé de fabrication par fusion sélective ou frittage sélectif de lits de poudre utilise un faisceau laser.

Dans d'autres modes de mise en oeuvre, ledit procédé de fabrication par fusion sélective ou frittage sélectif de lits de poudre utilise un faisceau d'électrons.

Dans d'autres modes de mise en oeuvre, ladite technique de fabrication additive est un procédé de fabrication par projection de poudre.

Dans certains modes de mise en oeuvre, au cours de l'étape d'orientation, le modèle est orienté de manière à minimiser le nombre de supports de fabrication et/ou leurs tailles. Ces supports de fabrication sont notamment nécessaires lorsqu'une couche de la pièce dépasse latéralement du support formé par la couche de la pièce juste inférieure. De cette manière, il est possible de limiter le nombre d'usinages à mener sur la pièce brute pour obtenir la pièce : on économise également ainsi de la poudre. En outre, on limite ainsi l'impact de la rugosité résultante du procédé de mise en couche.

Dans certains modes de mise en oeuvre, au cours de l'étape d'orientation, le modèle est orienté de manière à minimiser la hauteur de la pièce dans la direction de construction. On minimise ainsi le nombre de couches et donc la quantité de poudre utilisée et le temps de fabrication. En outre, le risque de déformation est également réduit et l'état de surface obtenu est plus homogène.

Dans certains modes de mise en oeuvre, la pièce à fabriquer est une pièce d'aubage comportant un bord d'attaque, un bord de fuite et une pale.

Dans certains modes de mise en oeuvre, le modèle numérique de la pièce d'aubage est orienté de manière à ce que son bord d'attaque ou son bord de fuite soit dirigé vers la table de construction. De cette manière, il est possible de minimiser le recours aux supports de fabrication.

Dans certains modes de mise en oeuvre, le plan d'équilibrage de la pièce d'aubage coupe la pièce d'aubage sensiblement à mi-hauteur de sa pale.

Les caractéristiques et avantages précités, ainsi que d'autres, apparaîtront à la lecture de la description détaillée qui suit, d'exemples de réalisation du procédé proposé. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence.

La FIG 1 est une vue d'ensemble d'un dispositif de fabrication additive par fusion sélective de lits de poudre.

La FIG 2A et 2B sont des vues en perspective et en plan du modèle original d'un exemple de pièce à fabriquer.

Les FIG 3A et 3B sont des vues en perspective et en plan du modèle des figures 2A et 2B pour lequel un plan d'équilibrage est défini.

La FIG 4A est une vue en perspective du modèle des FIG 3A et 3B auquel une portion sacrificielle d'équilibrage a été ajoutée.

La FIG 4B est une vue en plan d'un couche du modèle de la FIG 4A.

La FIG 5 est une vue en perspective de la pièce brute obtenue à l'aide du modèle de la FIG 4A.

La FIG 6 est une vue en perspective de la pièce finale après enlèvement de la partie sacrificielle de la pièce brute.

### DESCRIPTION DETAILLEE D'EXEMPLE(S) DE REALISATION

Afin de rendre plus concrète l'invention, un exemple de procédé est décrit en détail ci-après, en référence aux dessins annexés. Il est rappelé que l'invention ne se limite pas à cet exemple.

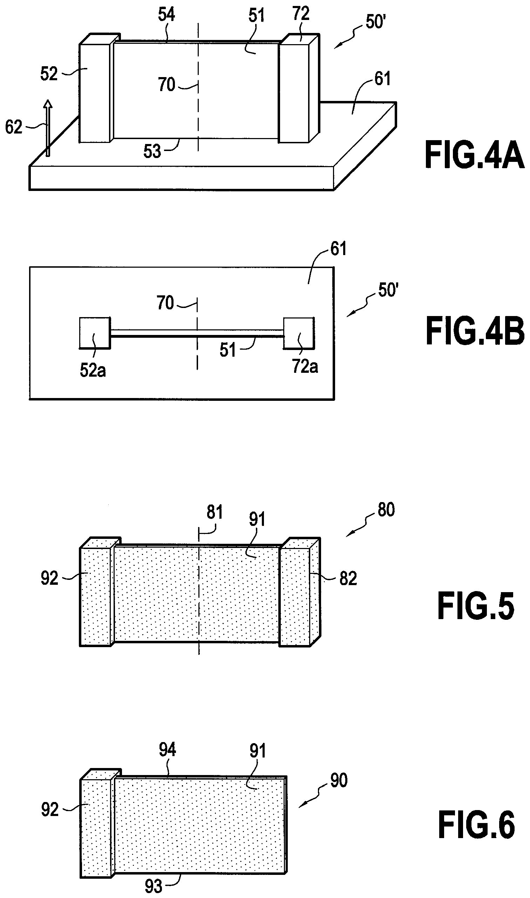

Dans le cadre de cet exemple, on cherche à fabriquer une aube 90 telle que représentée très schématiquement sur la FIG 6. Cette aube 90 comprend une pale 91, munie d'un bord d'attaque 93 et d'un bord de fuite 94, et un pied 92 prévu à une extrémité de la pale 91. La pale 91 est fine et allongée tandis que le pied 92 est épais et compact : le pied 92 constitue ainsi une partie dissymétrique de l'aube 90. En effet, si l'aube 90 venait à être privée de son pied 92, cette dernière disposerait d'un plan de symétrie coupant la pale 91 à mi-hauteur.

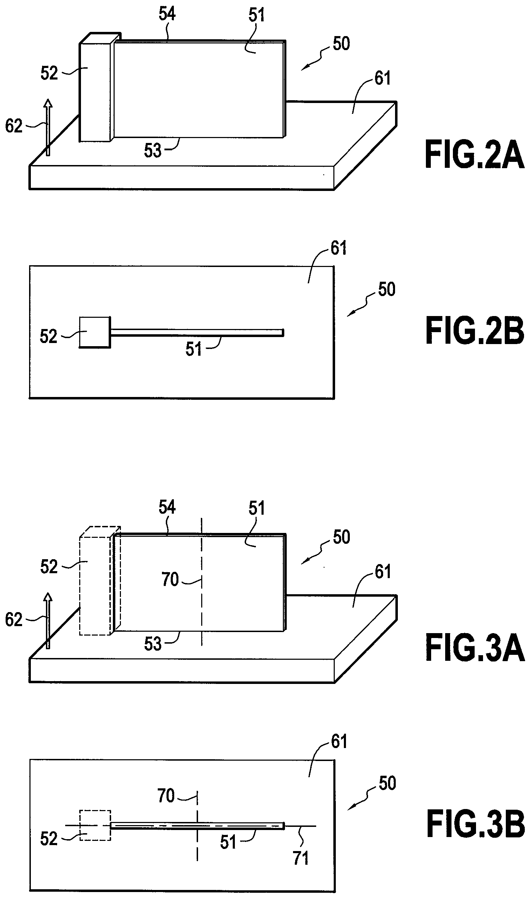

Au cours d'une première étape, on réceptionne dans un logiciel de conception assistée par ordinateur (CAO) le modèle numérique 50 de l'aube 90. Comme cela est représenté sur les figures 2A et 2B, ce modèle numérique 50 comprend une première portion 51 fine et allongée correspondant à la pale 91 et une deuxième portion 52 épaisse et compacte correspondant au pied 92. Ainsi, la deuxième portion 52 du modèle 50 constitue une portion dissymétrique du modèle 50.

Au cours d'une deuxième étape, on oriente le modèle 50 par rapport à l'image numérique 61 du plateau de fabrication 21 et à la direction de construction 62 perpendiculaire à ladite image du plateau 61. Afin de minimiser le recours aux supports de fabrication, le modèle 50 est orienté de telle manière que son bord 53 correspondant au bord d'attaque 93 de l'aube 90 soit dirigé vers l'image du plateau 61. Toutefois, il serait également possible d'orienter le modèle 50 de telle manière que son bord 54 correspondant au bord de fuite 94 de l'aube 90 soit dirigé vers l'image du plateau 61.

Au cours d'une troisième étape représentée aux FIG 3A et 3B, on s'intéresse à la portion résiduelle du modèle 50 lorsqu'il a été privé de sa portion dissymétrique 52 : en l'occurrence, il s'agit de la première portion 51 correspondant à la pale 91. On repère alors un plan de symétrie 70 de cette portion résiduelle 51 qui soit parallèle à la direction de construction 62 et on le définit comme plan d'équilibrage du modèle 50. En l'espèce, ce plan d'équilibrage 70 coupe la première portion 51 du modèle 50, correspondant à la pale 91 de l'aube 90, à mi-hauteur de la pale.

On peut remarquer à ce sujet que la portion résiduelle 51 du modèle 50 possède un second plan de symétrie longitudinal 71 qui est également parallèle à la direction de construction 62 : toutefois, cet autre plan de symétrie 71 ne peut être choisi comme plan d'équilibrage dans la mesure où le modèle original 50 de l'aube 90 est déjà symétrique par rapport à ce plan 71.

Au cours d'une quatrième étape représentée à la FIG 4B, on se place successivement dans chaque couche de fabrication le long de la direction de construction 62 depuis l'image du plateau 61 et on ajoute dans chaque couche une tranche d'équilibrage 72a au modèle 50 de manière à restaurer la symétrie de la couche par rapport au plan d'équilibrage 70. Ainsi, dans chaque couche perpendiculaire à la direction de construction 62, la tranche d'équilibrage 72a est symétrique à la tranche considérée 52a de la portion dissymétrique 52.

Une fois cette opération réalisée pour la totalité des couches du modèle 50, on obtient un modèle modifié 50' représenté à la FIG 4A comprenant une portion sacrificielle d'équilibrage 72 résultant de l'empilement des tranches d'équilibrage 72a. Le modèle modifié 50' est donc désormais symétrique par rapport au plan d'équilibrage 70, la portion sacrificielle d'équilibrage 72 étant symétrique à la portion dissymétrique 52 par rapport au plan d'équilibrage 70.

Dès lors, on peut lancer la fabrication d'une pièce brute 80 par fabrication additive, couche par couche, sur la base du modèle modifié 50'. Dans cet exemple, illustré à la FIG 1, il s'agit d'un procédé de fabrication par frittage sélectif de lits de poudre. Il pourrait toutefois s'agir de manière analogue d'un procédé de fabrication par projection de poudre.

On dépose ainsi une première couche 10a de poudre du matériau souhaité, en l'occurrence de la poudre base nickel, sur le plateau de fabrication 21.

On balaye une première région de ladite première couche 10a avec le faisceau laser 31 de façon à chauffer localement la poudre de ladite région à une température supérieure à la température de frittage de cette poudre, de telle sorte que les particules de ladite poudre ainsi fondue ou frittée provenant de ladite première région forment alors un premier élément d'un seul tenant 12a.

On dépose une deuxième couche 10b de poudre dudit matériau sur ladite première couche de poudre 10a.

On balaye une deuxième région de ladite deuxième couche 10b recouvrant au moins partiellement ledit premier élément d'un seul tenant 12a par le faisceau 31 de façon à chauffer la poudre de cette deuxième région à une température supérieure à la température de frittage de cette poudre, de telle sorte que les particules de la poudre ainsi frittée ou fondue forment un deuxième élément d'un seul tenant 12b lié au premier élément d'un seul tenant 12a et qui surmonte ce dernier.

On répète alors les deux étapes précédentes pour chaque nouvelle couche de poudre à déposer au-dessus d'une couche précédente, et ce jusqu'à la formation complète de la pièce brute 80 représentée sur la FIG 5.

Cette pièce brute 80 comprend la pale 91 et le pied 92 attendus ainsi qu'une partie sacrificielle d'équilibrage 82 symétrique au pied 92 par rapport à un plan de symétrie 81 de la pièce brute 80 correspondant au plan d'équilibrage 70. Idéalement, la partie sacrificielle d'équilibrage 82 possède donc la même géométrie, à une réflexion près, et la même masse que le pied 91 qui était la partie dissymétrique de l'aube 90.

Grâce à la présence cette partie sacrificielle d'équilibrage 82, fabriquée en même temps que le reste de la pièce brute 80, le réseau de contraintes résiduelles de la pièce brute 80 est réparti de manière symétrique, et donc équilibrée, de part et d'autre du plan de symétrie 81. La pièce brute 80 est donc dépourvue de défauts majeurs résultants habituellement de déformations provoquées par ces contraintes résiduelles.

Enfin, une fois la pièce brute 80 obtenue, il suffit de retirer la partie sacrificielle d'équilibrage 82 par usinage afin d'obtenir l'aube 90 souhaitée. Dans certains cas, des étapes d'usinage complémentaires peuvent être nécessaires avant l'obtention de la pièce finale, notamment lorsque des supports de fabrication ont été nécessaires.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation.

## Revendications

1. Procédé de fabrication de pièce par fabrication additive, la pièce à fabriquer (90) possédant une partie dissymétrique (92), qui comprend les étapes suivantes :
fourniture d'un modèle numérique (50) d'une pièce à fabriquer (90),
orientation du modèle (50) par rapport à une direction de construction (62) de la pièce (90),
modification du modèle (50) par ajout d'une portion sacrificielle d'équilibrage (72) configurée de manière à équilibrer les contraintes résiduelles amenées à apparaitre dans la pièce (90) lors de sa fabrication,
réalisation d'une pièce brute (80) couche par couche à l'aide d'une technique de fabrication additive sur la base du modèle ainsi modifié (50'), lesdites couches étant empilées dans la direction de construction (62),
suppression par un procédé d'enlèvement de matière de la partie sacrificielle (82) de la pièce brute (80) issue de la portion sacrificielle d'équilibrage (72) du modèle (50'), et obtention de cette manière de ladite pièce à fabriquer (90),
dans lequel la portion sacrificielle d'équilibrage (72) est configurée de manière à ce que la partie sacrificielle (82) de la pièce brute (80) possède une masse comprise entre 70% et 130% de celle de la partie dissymétrique (92).

2. Procédé selon la revendication 1, **caractérisé en ce que** la portion sacrificielle d'équilibrage (72) est configurée de manière à ce que la partie sacrificielle (82) de la pièce brute (80) possède une masse comprise entre 90% et 110% de celle de la partie dissymétrique (92).

3. Procédé selon la revendication 2, **caractérisé en ce que** la portion sacrificielle d'équilibrage (72) est ajoutée sur une hauteur sensiblement équivalente à la hauteur de la partie dissymétrique (92).

4. Procédé selon la revendication 2 ou 3, **caractérisé en ce que** la portion sacrificielle d'équilibrage (72) est configurée de manière à ce que
Page corrigée pour l'entrée en phase la partie sacrificielle (82) obtenue soit construite à l'opposé de la partie dissymétrique (92) par rapport à la pièce brute (80).

5. Procédé selon l'une quelconque des revendications 2 à 4, **caractérisé en ce que** la portion sacrificielle d'équilibrage (72) est ajoutée de manière à munir le modèle (50') d'au moins un élément de symétrie de plus, de préférence d'un plan de symétrie de plus.

6. Procédé selon l'une quelconque des revendications 2 à 5, **caractérisé en ce que** la portion sacrificielle d'équilibrage (72) est configurée de manière à ce que la partie sacrificielle (82) de la pièce brute (80) soit symétrique à la partie dissymétrique (92) par rapport à un plan (81), ce plan étant un plan de symétrie de la pièce brute (80).

7. Procédé selon l'une quelconque des revendications 2 à 6, **caractérisé en ce que** l'étape de modification du modèle (50) inclut une étape de définition d'un plan d'équilibrage (70), parallèle à la direction de construction (62), correspondant à un plan de symétrie dont disposerait le modèle (50) s'il était dépourvu de sa portion dissymétrique (52) correspondant à la partie dissymétrique (92) de la pièce (90).

8. Procédé selon la revendication 7, caractérisé en ce l'étape de modification du modèle (50) inclut une étape d'équilibrage durant laquelle on ajoute au modèle (50), dans chaque couche perpendiculaire à la direction de construction (62), une tranche d'équilibrage (72a) restaurant la symétrie de la couche considérée du modèle (50) par rapport au plan d'équilibrage (70).

9. Procédé selon l'une quelconque des revendications 1 à 8, **caractérisé en ce que** ladite technique de fabrication additive est un procédé de fabrication par fusion sélective ou frittage sélectif de lits de poudre ou encore un procédé de fabrication par projection de poudre.

10. Procédé selon l'une quelconque des revendications 1 à 9, **caractérisé en ce que**, au cours de l'étape d'orientation, le modèle (50) est orienté de manière à minimiser le nombre de supports de fabrication et/ou leurs tailles.

11. Procédé selon la revendication 7 ou 8, **caractérisé en ce que** la pièce à fabriquer est une pièce d'aubage (90) comportant un bord d'attaque (93), un bord de fuite (94) et une pale (91),
**en ce que** le modèle numérique (50) de la pièce d'aubage (90) est orienté de manière à ce que son bord d'attaque (53) ou son bord de fuite (54) soit dirigé vers la table de construction (61), et
**en ce que** le plan d'équilibrage (70) de la pièce d'aubage (90) coupe la pièce d'aubage sensiblement à mi-hauteur de sa pale (91).

## Patentansprüche

1. Verfahren zur Herstellung eines Teils durch additive Herstellung, wobei das herzustellende Teil (90) einen asymmetrischen Abschnitt (92) aufweist, umfassend die folgenden Schritte:
Bereitstellen eines digitalen Modells (50) eines herzustellenden Teils (90),
Orientieren des Modells (50) in Bezug auf eine Konstruktionsrichtung (62) des Teils (90),
Modifizieren des Modells (50) durch Hinzufügen eines Ausgleichsopferabschnitts (72), der auf eine Weise ausgestaltet ist, um die Restspannungen, die in dem Teil (90) während seiner Herstellung auftreten, auszugleichen,
Verwirklichen eines Rohteils (80) mithilfe einer schichtweisen additiven Herstellungstechnik auf Grundlage des so modifizierten Modells (50'), wobei die Schichten in der Konstruktionsrichtung (62) übereinandergeschichtet werden,
Entfernen, durch ein Abtragungsverfahren, von Material von dem Opferabschnitt (82) des Rohteils (80), der aus dem Ausgleichsopferabschnitt (72) des Modells (50') entsteht, und Erhalten des herzustellenden Teils (90) auf diese Weise,
wobei der Ausgleichsopferabschnitt (72) auf eine solche Weise ausgestaltet ist, dass der Opferabschnitt (82) des Rohteils (80) eine Masse zwischen 70 % und 130 % jener des asymmetrischen Abschnitts (92) aufweist.

2. Verfahren nach Anspruch 1, **dadurch gekennzeichnet, dass** der Ausgleichsopferabschnitt (1) auf eine solche Weise ausgestaltet ist, dass der Opferabschnitt (82) des Rohteils (80) eine Masse zwischen 90 % und 110 % jener des asymmetrischen Abschnitts (92) aufweist.

3. Verfahren nach Anspruch 2, **dadurch gekennzeichnet, dass** der Ausgleichsopferabschnitt (72) auf einer Höhe im Wesentlichen gleich der Höhe des asymmetrischen Abschnitts (92) hinzugefügt wird.

4. Verfahren nach Anspruch 2 oder 3, **dadurch gekennzeichnet, dass** der Ausgleichsopferabschnitt (72) auf eine solche Weise ausgestaltet ist, dass der erhaltene Opferabschnitt (82) in Bezug auf das Rohteil (80) dem asymmetrischen Abschnitt (92) entgegengesetzt ist.

5. Verfahren nach einem der Ansprüche 2 bis 4, **dadurch gekennzeichnet, dass** der Ausgleichsopferabschnitt (72) auf eine solche Weise hinzugefügt wird, dass das Modell (50') mit zumindest einem zusätzlichen Symmetrieelement versehen wird, vorzugsweise einer zusätzlichen Symmetrieebene.

6. Verfahren nach einem der Ansprüche 2 bis 5, **dadurch gekennzeichnet, dass** der Ausgleichsopferabschnitt (72) auf eine solche Weise ausgestaltet ist, dass der Opferabschnitt (82) des Rohteils (80) symmetrisch zu dem asymmetrischen Abschnitt (92) in Bezug auf eine Ebene (81) ist, wobei diese Ebene eine Symmetrieebene des Rohteils (80) ist.

7. Verfahren nach einem der Ansprüche 2 bis 6, **dadurch gekennzeichnet, dass** der Schritt des Modifizierens des Modells (50) einen Schritt zur Definition einer Ausgleichsebene (70) parallel zur Konstruktionsrichtung (62) umfasst, die einer Symmetrieebene entspricht, über welche das Modell (50) verfügen würde, wenn es seinen asymmetrischen Abschnitt (52) entsprechend dem asymmetrischen Abschnitt (92) des Teils (90) nicht aufweisen würde.

8. Verfahren nach Anspruch 7, **dadurch gekennzeichnet, dass** der Schritt des Modifizierens des Modells (50) einen Ausgleichsschritt umfasst, während dem dem Modell (50) in jeder Schicht senkrecht auf die Konstruktionsrichtung (62) ein Ausgleichsstück (72a) hinzugefügt wird, das die Symmetrie der jeweiligen Schicht des Modells (50) in Bezug auf die Ausgleichsebene (70) wiederherstellt.

9. Verfahren nach einem der Ansprüche 1 bis 8, **dadurch gekennzeichnet, dass** die additive Herstellungstechnik ein Herstellungsverfahren durch selektives Verschmelzen oder selektives Sintern von Pulverlagen oder auch ein Herstellungsverfahren durch Pulversprühen ist.

10. Verfahren nach einem der Ansprüche 1 bis 9, **dadurch gekennzeichnet, dass** im Zuge des Orientierungsschritts das Modell (50) auf eine Weise orientiert wird, um die Anzahl der Herstellungsträger und/oder deren Größen zu minimieren.

11. Verfahren nach Anspruch 7 oder 8, **dadurch gekennzeichnet, dass** das herzustellende Teil ein Beschaufelungsteil (90) mit einer Vorderkante (93), einer Hinterkante (94) und einem Blatt (91) ist,
dass das digitale Modell (50) des Beschaufelungsteils (90) auf eine solche Weise orientiert ist, dass seine Vorderkante (53) oder seine Hinterkante (54) zu dem Konstruktionstisch (61) hin orientiert ist, und
dass die Ausgleichsebene (70) des Beschaufelungsteils (90) das Beschaufelungsteil im Wesentlichen auf halber Höhe seines Blatts (91) schneidet.

## Claims

1. A method of fabricating a part by additive fabrication, the part (90) to be fabricated possessing an asymmetrical portion (92), which comprises the following steps:
supplying a digital model (50) of a part (90) to be fabricated;
orienting the model (50) relative to a construction direction (62) for constructing the part (90);
modifying the model (50) by adding a sacrificial balancing fraction (72) configured so as to balance the residual stresses that appear in the part (90) while it is being fabricated;
making a rough part (80) layer by layer using an additive fabrication technique on the basis of the model (50') as modified in this way, said layers being stacked in the construction direction (62); and
eliminating the sacrificial portion (82)thanks to a material-removal method from the rough part (80) as results from the sacrificial balancing fraction (72) of the model (50'), thereby obtaining said part (90) that is to be fabricated;
wherein the sacrificial balancing fraction (72) is configured in such a manner that the sacrificial portion (82) of the rough part (80) possesses mass lying in the range 70% to 130% of the mass of the asymmetrical portion (92) .

2. A method according to claim 1, **characterized in that** the sacrificial balancing fraction (72) so configured so that the sacrificial portion (82) of the rough part (80) possesses mass lying in the range 90% to 110% of the mass of the asymmetrical portion (92).

3. A method according to claim 2, **characterized in that** the sacrificial balancing fraction (72) is added over a height substantially equivalent to the height of the asymmetrical portion (92).

4. A method according to claim 2 or claim 3, **characterized in that** the sacrificial balancing fraction (72) is configured in such a manner that the resulting sacrificial portion (82) is constructed opposite from the asymmetrical portion (92) relative to the rough part (80) .

5. A method according to any one of claims 2 to 4, **characterized in that** the sacrificial balancing fraction (72) is added so as to provide the model (50') with at least one additional element of symmetry, preferably an additional plane of symmetry.

6. A method according to any one of claims 2 to 5, **characterized in that** the sacrificial balancing fraction (72) is configured in such a manner that the sacrificial portion (82) of the rough part (80) is symmetrical to the asymmetrical portion (92) relative to a plane (81), said plane being a plane of symmetry of the rough part (80).

7. A method according to any one of claims 2 to 6, **characterized in that** the step of modifying the model (50) includes a step of defining an equilibrium plane (70) parallel to the construction direction (62) and corresponding to a plane of symmetry that the model (50) would have if it did not have its asymmetrical portion (52) corresponding to the asymmetrical portion (92) of the part (90).

8. A method according to claim 7, **characterized in that** the step of modifying the model (50) includes a balancing step during which a balancing segment (72a) is added to the model (50) in each layer perpendicular to the construction direction (62), the balancing segment (72a) restoring symmetry to the layer under consideration of the model (50) relative to the equilibrium plane (70).

9. A method according to any one of claims 1 to 8, **characterized in that** said additive fabrication technique is a method of fabrication by selecting melting or selecting sintering of beds of powder, or indeed a method of fabrication by powder projection.

10. A method according to any one of claims 1 to 9, **characterized in that** during the orientation step, the model (50) is oriented so as to minimize the number of fabrication supports and/or so as to minimize their sizes.

11. A method according to claim 7 or claim 8, **characterized in that** the part to be fabricated is a blading part (90) having a leading edge (93), a trailing edge (94), and an airfoil (91);
**in that** the digital model (50) of the balding part (90) is oriented in such a manner that its leading edge (53) or its trailing edge (54) faces towards the construction table (61); and
**in that** the equilibrium plane (70) of the blading part (90) intersects the blading part substantially halfway along its airfoil (91).
